(19)

Europäisches
Patentamt
European
Patent Office
Office européen
des brevets

(11) **EP 3 088 912 A1**

(12) **EUROPEAN PATENT APPLICATION**

(43) Date of publication:
**02.11.2016 Bulletin 2016/44**

(51) Int Cl.:
*G01S 7/52* (2006.01)          *G01S 15/89* (2006.01)

(21) Application number: **15166098.2**

(22) Date of filing: **30.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicants:
• **iMinds**
  **9052 Zwijnaarde (BE)**
• **VRIJE UNIVERSITEIT BRUSSEL**
  **1050 Brussel (BE)**

(72) Inventors:
• **Dooms, Ann**
  **9470 Denderleeuw (BE)**
• **Schelkens, Peter**
  **2830 Willebroek (BE)**
• **Schretter, Colas**
  **1390 Grez-Doiceau (BE)**
• **Bundervoet, Shaun**
  **8400 Oostende (BE)**

(74) Representative: **DenK iP**
  **Hundelgemsesteenweg 1116**
  **9820 Merelbeke (BE)**

(54) **ULTRASOUND IMAGING SYSTEM AND METHOD FOR REPRESENTING RF SIGNALS THEREIN**

(57)    The present invention relates to a method for determining a representation of multichannel radiofrequency, RF, signals acquired from a physical environment, which comprises a transmitter comprising one or more transmitting elements for emitting ultrasound excitation pressure waves, a propagation medium containing non-uniformities reflecting the pressure waves and a receiver comprising one or more elements for recording the multichannel RF signals from the reflected pressure waves. The method comprises
- determining a set of basis functions for representing the received reflected signals by deriving a model, whereby deriving said model comprises
* modelling the transmitter as one or more transmitting elements and the receiver as one or more receiving elements,
* modelling the propagation medium bounded by said transmitter and said receiver,
* modelling individual responses of the non-uniformities to said excitation pressure waves,
* deriving the set of basis functions from said individual responses by simulating response to excitation of the non-uniformities in the propagation medium,

- determining a representation of the recorded multichannel RF signals using the set of basis functions obtained with the model.

Fig. 4

**Description**

**Field of the invention**

The present invention is generally related to the field of ultrasound applications employing compressive sensing to reduce the required amount of data samples.

**Background of the invention**

In many existing applications, like e.g. medical imaging in health care or non-destructive testing in industrial applications, ultrasound probes are capable of detecting deformities such as cysts in tissue or air bubbles in welding seams. The image formation process however requires the acquisition of a huge amount of raw data. As data transmission from the probe to the host computer becomes the bottleneck, one is nowadays faced with the problem that the amount of data to deal with - up to several Gigabytes per second - constitutes a limiting factor to both the desired spatial and temporal resolution of the system, which impedes obtaining the highest possible signal-to-noise ratio for reconstructing the image.

In the medical field ultrasound (US) imaging remains the modality of choice in numerous applications (e.g. pregnancy monitoring, cardiac imaging, blood flow estimation) due to its safety, relative low cost and rapidity. The truly interactive nature of handheld devices provides the ability to naturally capture motion. Tremendous benefits have been demonstrated for various clinical applications, in particular for imaging structural heart diseases in interventional cardiology. Phased array ultrasound probes for cardiac imaging already allow 3D data acquisitions at acceptable frame rate. Further advances in high-resolution phased array detectors could enable measurements of strain in smaller structures in orthopedics. Organs of interests are bundles of thin fibre structures such as tendons.

However, for high-resolution two-dimensional or three-dimensional scans, one is quickly faced with the above-mentioned problem of an excessive amount of raw data. In a high-resolution ultrasound imaging scenario for example, the amount of acquired data grows with the number of lines in the array. In practice, an order of magnitude more data elements than image pixels need to be acquired, so that the transfer of measurements to the computer forms a big data challenge.

More concretely, in an ultrasound imaging every vertical line profile is generated from a huge matrix $f$ containing $L = L_x \times L_y$ measurements. In the imaging pipeline this matrix is beamformed, which in its simplest implementation, boils down to a summation over its rows. As a result the amount of information is reduced by a factor $L_x$. Despite of this reduction all $L_x$ raw RF lines are needed to perform the beamforming operation. The result of receive beamforming is an averaging of all measurements at equal depth but detected by multiple identical recording elements, which helps to better discern the signal of interest from underlying noise. Prior works exists in an attempt to approximate the sum from fewer matrix elements (e.g. "Compressed beamforming in ultrasound imaging", N. Wagner et al., IEEE Transactions on Signal Processing, vol. 60, no. 9, pp. 4643-4657, 2012).

The importance of this process can be illustrated by situating it in the imaging pipeline. First a select number of elements on the transmitter are excited in order to produce a modulated acoustic pulse. These active elements are fired using specific delays such that all separate pulses, created by the individual elements, interfere to form a narrow acoustic beam. Moreover an apodization window is applied to the transmitting elements in order to reduce side lobes. This transmit beamforming process ensures that all energy is directed towards a chosen focus point. This is the narrowest point of the beam, containing the highest energy density, before it expands again and starts to dissipate. As a result, only the medium within this narrow field of interests is insonified.

As a result of this excitation, sound propagating in a medium eventually scatters back towards the receiver. All elements aligned on the receiver record these echo signals simultaneously. Hence, a series of high-frequency echo response is captured and a reconstruction procedure is needed to construct an image line from this channel RF data. These recordings operate at a typically high frequency sampling rate in order to capture possible frequency shifts that occur due to relative changes of speed of sounds in media of different density.

The captured raw data then needs to be processed. It is at this point that the data bottleneck arises. The first step in the processing consists of the aforementioned receive beamforming. In this step the samples, stored in the channel RF matrix $f$, are aligned such that all samples stored in one row of $f$ correspond to equal depth in the insonified medium. After performing a receive apodization the matrix is summed over its columns as described above. The result is a high-frequency 1D signal or beamformed RF line. The above process has to be performed for each desired image line.

A gain compensation can be applied to each RF channel to correct for time-dependent loss of energy as the excitation pulse penetrates deeper in to the medium of interest. An envelope detection method is applied to each beamformed RF line in order to demodulate the signal. This is typically implemented using a complex Hilbert transform. Finally, the dynamic range of the signal is compressed using a log-transform to map the high-dynamic range of reconstructed signals to a standard grayscale image line profile.

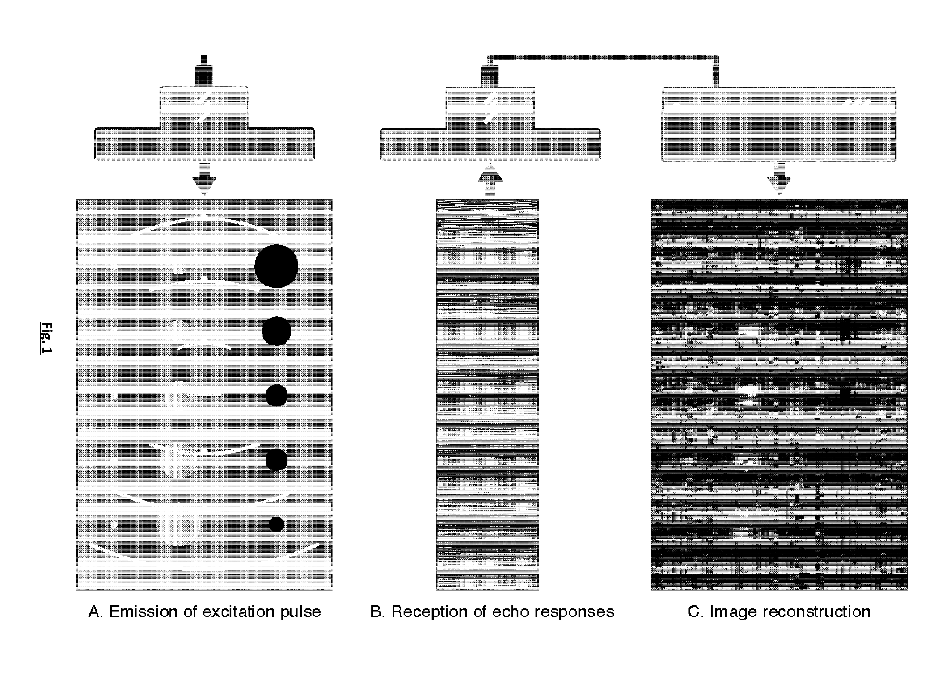

Fig.1 illustrates the typical data acquisition and image formation process. First, a radiofrequency modulated excitation waveform is generated for every vertical line profile of the final image (A). The echo responses generated by structural anomalies are recorded by microphones on the transducer (B). Finally, a vertical line profile is computed from the matrix of recorded RF channel information (C).

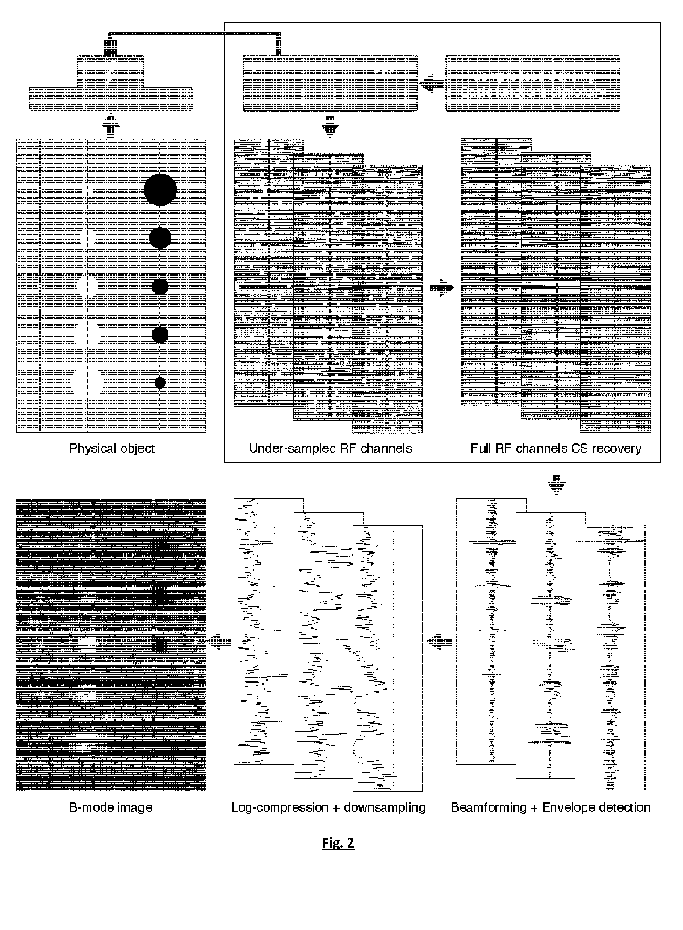

Fig.2 shows the image formation pipeline in ultrasound imaging. After excitation, each microphone on the receiving probe is receiving echo sound waves, these recordings form individual channels of radiofrequency measurements. For each vertical line profile, the full RF channels matrix can be recorded. The processing chain is illustrated for three such line profiles straddling the small structures on the left, the strong echo emitting rods in the middle and the absorbing structures on the right. The probe transmits part of the full RF channels on the host computer that recovers an approximation of the complete information, using linear combinations of ad hoc basis functions. Then the RF channels are combined by beamforming and the frequency modulation is removed with envelope detection. Finally, the signal is compressed to a low dynamic range and mapped to grayscale values for visualization of the brightness (B-mode) image on display.

Various methods have been proposed to reduce the amount of data sent from the receiver to the processing unit. The methods primarily depend on the compressed sensing framework (*"An introduction to compressive sampling"*, Candes et al., IEEE Signal Processing Magazine, vol. 25, pp. 21-30, 2008). Compressed sensing (CS), also referred to as compressive sampling, is a theory that emerged in 2006 and aims to provide reconstructions of full data sets while reducing the amount of data collected during the acquisition. The principle of CS is to measure only a few representative samples of a compressible signal and then to reconstruct the original signal or an approximation of it, through optimization. It differs from compression, as the data reduction is performed directly at the acquisition stage instead of the classical compression scenario where the reduction is a function of a global analysis on the full data set. CS has been successfully applied to a number of domains, including medical imaging, in particular in magnetic resonance tomography.

In ultrasound imaging compressed sensing has been applied for improving the acquisition speed. Others have applied the framework at the beamforming stage, once raw RF channels data are acquired. A statistical variant of the compressed sensing paradigm has been experimented to mitigate the effect of measurement noise. Distributed sampling has also been proposed in order to combine the complementary information from adjacent single RF channel signals.

Two key ingredients are needed for signal reconstruction with compressed sensing: the choice of a specific sampling strategy and the design of basis functions which can next be used to sparsify the signal. Various pseudo-random sampling masks have been tested for selecting fewer lines and elements from raw RF channels measurement matrices in the case of linear array probes. Both Fourier expansions, orthogonal wavelets and wave atoms basis functions have been compared for representing raw RF channels data in ultrasounds (*"Pre-beamformed RF signal reconstruction in medical ultrasound using compressive sensing"*, H.Liebgott et al, Ultrasonics, vol. 53, no. 2, pp. 525-533, 2013), but experimental results achieve a maximum data reduction rate of about 80%, which is still about five times more than the capacity of current counting electronics hardware for high-definition volumetric wide phased-array probes that can be manufactured today at for instance up to 32 times more detector elements for a probe.

The current collection of basis functions used to represent channel RF data are generic in the sense that they are suited to represent a large variety of signals, see e.g. the paper *"Biorthogonal bases of compactly supported wavelets"* (A. Cohen et al, Communications on Pure and Applied Mathematics, vol. 45, no. 5, pp. 485-560, 1992). This, however, limits their capability to concisely represent channel RF data that present very specific high-frequency variations due to the modulation by the emitted carrier wave. For instance, wave atoms, which are especially constructed to represent oscillatory wave patterns, do not take full advantage of the very specific structure present in RF data originating from an ultrasound system.

A common overall characteristic of prior art solutions is that the properties of the recorded signal are observed for selecting general-purpose signal representation. However, the underlying structure of the propagation medium and the mechanic of sound transport, as well as the specific sensitivity of sensing with probes are not taken into account. Hence, there is a need for a technique for designing a dictionary of basis functions that takes into account the physical nature of the RF channel signals and of the probes, so that a more accurate representation of the reflected RF signals can be achieved.

**Summary of the invention**

It is an object of embodiments of the present invention to provide for a technique for determining a representation of channel RF data obtained in an ultrasound imaging system with an optimized set of basis functions. It is a further object to present an ultrasound imaging system wherein such a representation of channel RF data with optimized basis functions is applicable.

The above objective is accomplished by the solution according to the present invention.

In a first aspect, the invention relates to a method for determining a representation of multichannel radiofrequency, RF, signals acquired from a physical environment comprising a transmitter comprising one or more transmitting elements for emitting ultrasound excitation pressure waves, a propagation medium containing non-uniformities reflecting the pressure waves and a receiver comprising one or more elements for recording the multichannel RF signals from the reflected pressure waves. The method comprises

- determining a set of basis functions for representing the received reflected signals by deriving a model, whereby deriving said model comprises

    * modelling the transmitter as one or more transmitting elements and the receiver as one or more receiving elements,
    * modelling the propagation medium bounded by said transmitter and said receiver,
    * modelling individual responses of the non-uniformities to said excitation pressure waves,
    * deriving the set of basis functions from said individual responses by simulating response to excitation of the non-uniformities in the propagation medium,

- determining a representation of the recorded multichannel RF signals using the set of basis functions obtained with the model.

The proposed solution indeed allows for determining a representation of the RF channels using an accurate domain specific set of basis functions that are dependent on the properties of the emitted pressure waves, the physics of sound propagation in the considered medium, and the sensitivity of the recording of the RF channels by the receiving elements.

In a preferred embodiment the method comprises a step wherein the recorded multichannel RF signals represented using said set of basis functions are combined to reconstruct an approximation of the complete raw data channel signal from which the multichannel RF signals are obtained.

In an advantageous embodiment the recorded multichannel RF signals are sampled with a non-uniform sampling pattern. This particular sampling pattern yields the advantage that more samples can be collected close to the central line profile of the probe.

In one embodiment the reconstruction involves the application of an iterative reweighted least squares technique.

Preferably the modelling of the transmitter and/or the receiver takes in to account the geometry.

Typically the method comprises a step of making a brightness image using the representation of the recorded RF signals.

The invention also relates to a program, executable on a programmable device containing instructions, which when executed, perform the method as previously described.

In another aspect the invention relates to an ultrasound imaging system comprising

- a transmitter for emitting excitation pressure waves over a propagation medium reflecting the pressure waves, said transmitter comprising one or more transmitting elements,
- a receiver comprising one or more elements for recording multichannel RF signals from the reflected pressure waves,
- processing means arranged for deriving a model of said transmitter and said receiver and of the propagation medium and the individual responses of non-uniformities of the propagation medium to the excitation pressure waves and for deriving a set of basis functions using the model, said processing means further arranged for determining a representation of the recorded multichannel RF signals using the set of basis functions.

In a preferred embodiment the transmitter and the receiver are integrated.

In one embodiment the transmitter elements and/or the receiver elements are piezo-electric crystals or silicon membranes.

Advantageously, the ultrasound imaging system comprises sampling means for sampling said recorded multichannel RF signals.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

**Brief description of the drawings**

The invention will now be described further, by way of example, with reference to the accompanying drawings, wherein like reference numerals refer to like elements in the various figures.

Fig.1 illustrates a system diagram representing the data acquisition and image formation process.
Fig.2 illustrates a pipeline diagram of the image formation pipeline in ultrasound imaging.
Fig.3 represents a system matrix geometrical visualization of the matrices involved in the design of the linear system that is solved with the compressive sensing approach.
Fig.4 illustrates a block diagram of the information processing for the three subsequent emission, recording and processing phases of the imaging pipeline.
Fig.5 illustrates the shift-variant shape of thee selected basis functions corresponding to three point scatterers placed at different spatial locations.
Fig.6 illustrates some possible subsampling strategies for collecting few measurements from full radiofrequency channel data matrices.

**Detailed description of illustrative embodiments**

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

The present invention proposes an approach for optimal domain-specific design of basis functions for reconstructing raw data signals from a number of independent RF channels in an ultrasound setup. More specifically, the invention capitalizes on the derivation of a physically-based simulation model to design an optimal set of basis functions.

To be more precise, the invention aims at recovering an accurate approximation of the full raw RF channel data from only a subset of the complete set of data samples. Afterwards resulting images can be produced with the standard image formation pipeline. In medical applications of ultrasound imaging, each brightness (B-mode) image line profile is acquired successively to visualize the anatomy along the depth axis. A transducer is emitting a high-frequency excitation sound wave over a short period of time. The proposed approach can advantageously be used in applications where a higher resolution and, hence, a larger amount of data is required.

The approach described here is positioned at the data collection stage and tackles the problem of reconstructing raw RF channels from few data samples. From these few measurements, a reconstruction problem is solved by projecting measurements on a set of basis functions that are well suited to represent typical wave fields of modulated sound that propagates in space. The reconstruction of RF channels from few selected samples is solved by representing the signal as a linear combination of physically based modulated basis functions that span the space of raw radiofrequency channels.

By taking factors like the typical bending present in these signals and the central frequency of the oscillation, to name just a few, one only has to allocate coefficients in this basis function to represent the key information and not the natural structure which is always present in this particular data set. The rationale behind the design of suitable basis functions is the observation that the high-frequency variations of modulation from the carrier wave are not informative of the actual anatomy. Therefore, the carrier wave modulation can be represented by the basis functions themselves. Since the space of possible RF channel instances is limited to high-frequency modulated signals only, the inverse problem of estimating decompositions from few data samples is better conditioned and less input measurements suffice to recover approximations of the original full raw RF channel matrix.

A sufficient set of basis functions must be constructed for representing raw RF channel data. The number of such basis functions is limited in accordance with the expected resolution in the final brightness (B-mode) image presented to the physician. This image is demodulated and contains relatively low-frequency signals. For each element of a vertical line profile through the final B-mode image, a line of basis functions is created for each receiving element (e.g. a microphone) of the receiving probe. In this way a coarse array of basis functions is created to represent the dense fully modulated raw RF channel matrix.

To each pixel of the B-mode image corresponds a depth (i.e. the vertical distance from the pixel to the receiving probe) and an axial offset (the horizontal distance separating two adjacent vertical image profiles). Then a physical model is used to compute the waveform that would be scattered back from an isolated point scatterer at the location of the pixel's centre. To know the initial scattering amplitude, the excitation wave arriving at the point scatterer is also simulated. Therefore, the creation of the basis functions follows a physical model that depends both on the geometry of the probe, the specific excitation waveform protocol and the data collection phase.

The accuracy of designed basis functions depends on the complexity of the physical simulation that can take into account advanced physical effects such as non-uniform spatial distribution of the tissues density, the individual sensitivity of microphones on the probe, the effect of multiple scattering, etc. In one embodiment, a standard Field II package (see "Field: a program for simulating ultrasound systems," J. A. Jensen, Medical & Biological Engineering & Computing, vol. 34, pp. 351-353, 1996) is used that assumes free wave propagation in water and simulates the attenuation of wave fields over time. In order to validate the approximation power of the set of simulated basis function, the projection of full measured data on these basis functions were computed. The produced B-mode image was very close to the original full dataset with only sub-pixel shifts of speckles' centres. Therefore, only slim improvements can be expected from incorporating more advanced physics into the design of basis functions.

Given a set of samples from the raw RF channels, the reconstruction stage estimates the coefficients of linear combinations of the set of basis functions, such that the reconstructed signal approximates the unknown complete dataset. When a very small number of samples is available, many linear compositions interpolate exactly these samples and the reconstruction problem is ill-posed. A linear problem is solved that minimizes a certain distance measure of the coefficients subject to the interpolation constraints. If the Euclidian distance metric (square root of the sum of squared values) is used as distance metric, the total energy of coefficients is minimized. Using the Manhattan distance metric (sum of absolute values) is promoting sparse set of coefficients.

Emerging theories of compressed sensing demonstrate theoretical applicability of various non-random sensing strategies as well as infringing the strict sparsity property of the signal representation. These principles have been applied in this invention, where arbitrary sampling is allowed and domain-specific basis functions are constructed. For being applicable, the proposed solution can exploit the sparsity of the signal to improve the reconstruction quality. However, under non-strictly sparse, but asymptotically sparse representations, this solution also provides significant improvements in terms of image quality. The present invention exploits these new developments in the compressed sensing theory. In particular, the incoherence between the sensing operator and the dictionary of basis functions is not strictly enforced from random sampling. Instead, deterministic constructions of the sampling operator are allowed.

A more mathematical formulation of the problem at hand is now provided. The compressive sensing framework allows for the reconstruction of a signal $f \in R^L$ using only a small number M of measurements $b \in R^M$, where $M \ll L$, with L the number of possible samples in the original signal. In the general setting these measurements are collected by correlating the signal *f* with M sensing vectors $\phi_i$, where i E [1...*M*]. The measurements thus take the form $b_i = <f, \phi_i>$, which is generally written in matrix form

$$b = Ax = \Phi f = \Phi \Psi W x \qquad (1)$$

with the underlying vector of coefficients x E $R^N$ parameterizing the linear decompositions. The forward imaging process is a succession of a demodulated image representation *Wx*, a modulation operator $\Psi$ depending on shift-variant point spread functions and a measurement sub-sampling mask $\Phi$.

*W* generally consists of an expansion into some common orthonormal basis elements, such as Fourier bases or orthonormal wavelets, or directional wavelet bases such as curvelets, Gabor functions, etc. This decomposition may be equivalent to a standard grid of pixels when W is the identity matrix. However, the choice of basis functions $\Psi$ is crucial for efficient recovery of *f* from few samples and should be specifically designed for the application domain at hand. In the art the basis functions are often referred to as point spread functions. As already indicated before, this is the main subject of this invention.

The sensing matrix $\Phi$ is dependent on the acquisition protocol and the vectors $\Phi_i$ are usually restricted to a random selection of Dirac pulses. Although random sampling fulfils the fundamental incoherence requirement with high probability, this sampling strategy may not allow for the optimum recovery quality given a limited number of samples. Incoherence states that the sampling masks $\Phi$ should be minimally correlated with the set of N basis vectors $\Psi_j, j \in$ [1...*N*] that are used for sparse approximation of *f*. Therefore, the specific sub-sampling strategy may be non-random and more adapted to the geometry and the sensitivity of the imaging system at hand. This will be elaborated later in this description.

Concerning the sensing scheme the proposed physical approach can also be used. Note that a Hanning apodization window is used at several stages of the imaging pipeline. First during emission of the excitation wave pulse, a progressive turning up then fade out of the volume is applied for sensing the wave pulse. Next, an apodization is usually performed during beamforming that is the delayed and sum average of raw RF channels to form RF lines. This window gives more importance to channels that are closer to the central imaging line. Therefore, the Hanning window can also be used for importance sampling to collect more data samples close to the imaging line.

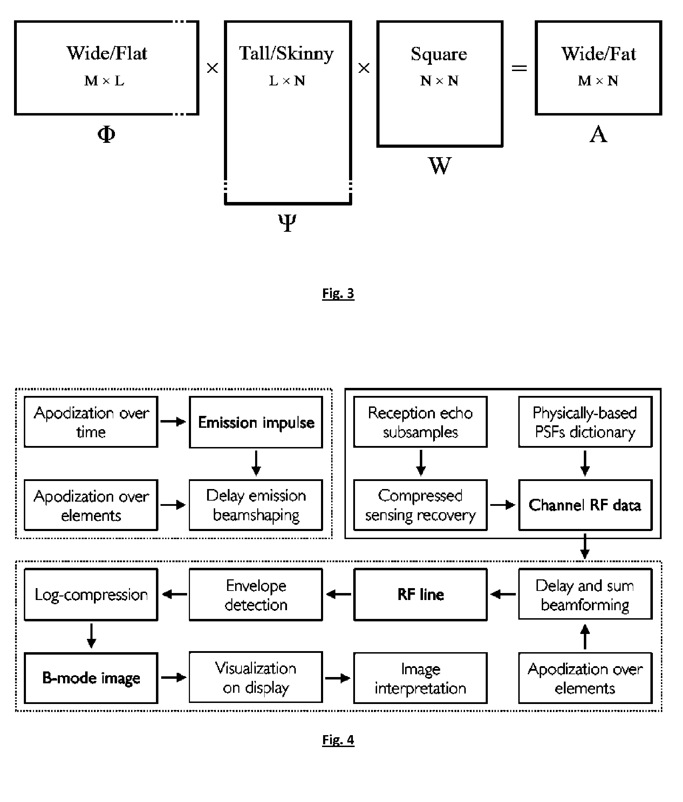

Fig.3 offers a geometrical visualization of the matrices involved in the design of the linear system solved with the compressive sensing approach. From left to right, a subsampling operator $\Phi$ collects M samples from all the L»M possible values stored in the full raw radiofrequency channels. These measurements are related with a collection $\Psi$ of N optimized point spread basis functions encoding the physics of sound transport and the geometry of the acquisition setup. Note that the product of $\Phi$ and $\Psi$ is independent of L. An optional image space transform W allows representing coefficients in various bases such as pixels (W=I) or wavelets. The size of the resulting system matrix A is dependent only on the number of data samples M and the number of basis functions N. Fig.4 shows a block diagram of the information processing for the three subsequent emission, recording and processing phases of the imaging pipeline. The invention is an addition to the recording stage highlighted in bold. An ad-hoc collection of basis functions is used for representing full raw radiofrequency channels from fewer samples. Then, a solution to a linear system of equations is sought for computing coefficients representing an approximation of the full data from few samples.

In compressed sensing the signal *f* is supposed to be sparse, meaning that only a small number *S* of coefficients x may be non-zero such that the approximation of the real acquired data stays within acceptable error bounds. The linear system of equations (1) can be solved for a sparse set of coefficients x by searching for the minimum $l_1$ norm solution, as this surrogate of the $l_0$ norm is proven to promote effectively sparsity. Other substitutions of the $l_0$ norm are possible objective functions for the optimization problem. In particular, the $l_2$ norm is minimizing the total energy of coefficients and presents therefore a suitable regularization prior for finding a unique solution to the underdetermined linear system to be solved.

A suitable model for representing the intermediate raw RF channels is designed starting from the point spread functions (PSF) of the imaging device. These basis functions can either be modelled parametrically or directly acquired using a phantom of isolated beads in water or computed from a physically based simulation of sound transport. The RF signal $f \in R^L$, where by L denotes the size of the raw measured signal, is typically represented using few significant coefficients from a dictionary $\Psi$, *i.e.* $N \leq L$, with N the number of basis vectors. Although this approach is mathematically sound, it presents a number of implementation challenges when trying to reconstruct a signal when N is very large. Therefore, the invention proposes to only use a small set of dictionary elements, *i.e.* L<<N, which are able to capture all content of interest within a signal which needs to be recovered. This does not only allow for faster implementations but also for dictionary elements having a much larger support, which in turn allows for a further reduction of the required number of samples due to the increased sparsity. The goal is so shifted from exact signal recovery to recovery of all visual information of significance.

Every location of scattering events in the physical world is associated with a point spread function in the measured data space. Since the number of visualizable speckles in the image depends on the intrinsic image resolution of the echography, the set of visually important scatterers is, by definition, sparse, while the RF channel data images generated by their point spread function are much more dense. Therefore, the proposed set of basis functions leads to optimally sparse image decompositions since every individual speckle in the ultrasound image is coded by a single coefficient in the decomposition.

The decomposition of raw RF measurements as a sparse sum of all point spread functions provides a natural data representation model driven by physics. Deriving a physical model therefore comprises modelling the transmit transducer as a number of transmitting elements and the receiving transducer as a set of receiving elements. By using this physically based design approach, the collection of basis functions can be tailored to the specific probe geometry and depends on both the transmission and receiving stages of the imaging protocol.

The vertical gap between neighbour spatial locations of basis functions is linked with the wavelength of the transmitted excitation wave pulse. The excitation pulse is of lower frequency (typically e.g., 3.5MHz) than the receiving (typically e.g. 25MHz). So the number of grid knots can be limited vertically since the reconstructed signal is of intrinsic lower frequency. The number of basis functions matches roughly the number of pixels in vertical B-mode image line profiles. The horizontal spacing between adjacent spatial locations of basis functions matches the space between microphones on the probe.

The propagation medium in which the sound propagates between the transmitter and the receiver is modelled. This may be important because the speed of sound is faster in denser media. One can approximate the medium to be of uniform density.

The grid of basis functions matches the observed space so it is preferably defined as a three-dimensional grid. One can design a 3D grid of basis functions, even for 2D imaging with linear array probes. However, the third dimension can as well be ignored if the density of scattering media does not change significantly with the distance to the imaging plane and the locations of basis functions can be constrained with the imaging plane under that hypothesis. An example wherein 2D modeling suffices, is found in the non-destructive testing on a metal sheet to detect sub-surface defects. In that case, it can be assumed that the sound stays confined to positions on the surface of the (metal) sheet and a 2D model would be accurate to capture first order physical effects within the sheet.

The basis functions populating the dictionary can be positioned arbitrarily. Regular spacing between adjacent grid knots meets the Nyquist sampling criterion for reconstructing signals exactly at the emission frequency of the modulation carrier wave. However, at very low sampling rates where exact reconstruction is not possible, limiting the number of basis functions may be beneficial for the regularization of the reconstruction problem.

Any arrangement of the plurality of basis functions forming the grid is acceptable since the recovery method does not assume a specific spatial structure for it. The spread of locations of basis functions can be adaptive, non-uniform. For example, one can have more basis functions close along the central line profile if the subsampling strategy is also following this strategy for non-uniform collection of data samples. In addition the boundary of the enclosing hull of grid knots do not have to be rectangular. For example knots that are a priori not significantly insonified in the depth-dependent side margins can be pruned such as to obtain a smaller dictionary. The significance of grid knots may be measured from the space-variant sensitivity function of the imaging setup.

In order to derive a suitable set of basis functions a simulation is performed wherein the various scatterers in the model are excited in sequence. The echo response from the phantom to the pulse emitted by the transducer is simulated for each scatterer. The corresponding signals obtained in the receiving transducer constitute the various basis functions. Received signals are not sparse, but dense with high-frequency variations due to the emitted carrier wave.

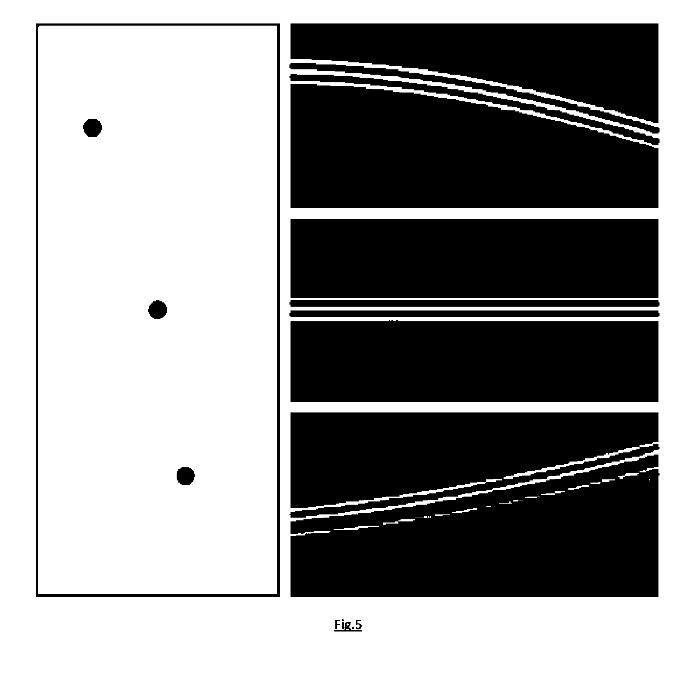

Because these basis functions have a very wide support, it is possible to represent dense raw RF channels data matrices with sparse decompositions in dictionaries of dense basis functions. The key point of the technique is that the basis functions are of wide support and frequency-modulated. Therefore, they contain a lot of a priori information that allows reducing the amount of collected data. For convenience of notation in the equation below, the point spread functions are reshaped into a single column vector before they are ordered into the dictionary matrix according to their location on the grid. For both of these steps a lexicographical reordering is used. Fig.5 illustrates the shift-variant shape of three selected basis functions corresponding to three point scatterers placed at different vertical distance from the probe as well as different horizontal shifts from the imaging center line. As can be seen, the support of the basis function is larger in regions of lower sensitivity, modeling the decrease of image resolution that translates into larger speckle size.

The original RF channel data obtained from the measurements can be subsampled. With the advent of high-definition linear array ultrasound probes and large phased array sensors, the data collection of raw RF channels is a bottleneck for the reading out electronics.

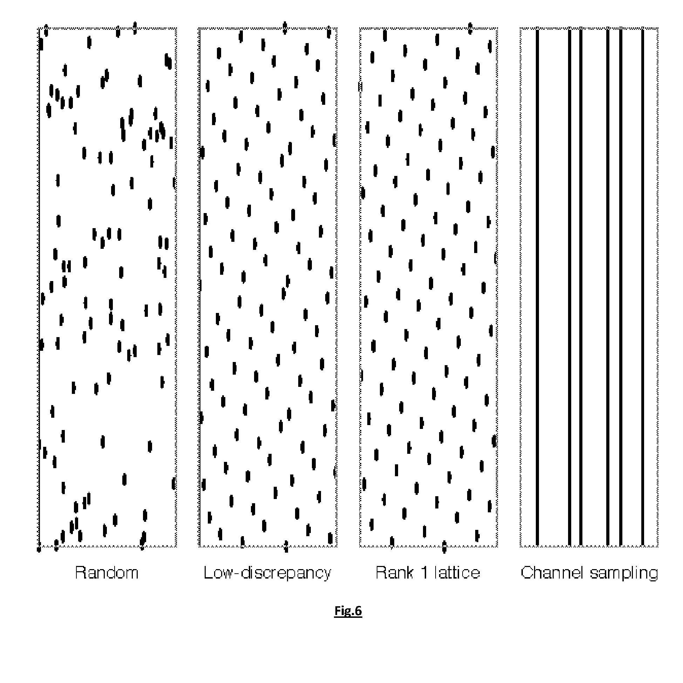

The method proposed here provides a solution for recovering approximations of full raw RF channels from a subset of samples only. Any subsampling strategy is acceptable, such as pseudo-random, low-discrepancy or non-uniform sampling. There is also the possibility to select whole channels instead of samples in the matrix. In the proposed implementation any sampling strategy can be used, see Fig.6. This flexibility may be needed to adapt to manufacturing constrains of sparse sampling onto the receiving probe. In particular, a non-uniform quasi-random sampling strategy proves very effective to collect more samples close to the central line profile. The used marginal density function is the exact same Hanning apodization window that will be used for the beamforming summation stage.

For reconstructing the original data from the sub-sampled channel RF data a numerical inversion method can then be used to solve the regularized linear system

$$\underset{x}{\operatorname{argmin}} \ |x|_1 \quad \text{subject to} \quad \|b - Ax\|_2 \leq \varepsilon \qquad (2)$$

with the noise tolerance parameter $\varepsilon \geq 0$ and the vector of measurements b. Starting from uniform constant coefficients $x^1 = (1, ..., 1)$ the new coefficients can be computed with a simple reweighting iterative scheme (see "Iteratively reweighted least squares minimization for sparse recovery", I. Daubechies et al., Communications on Pure and Applied Mathematics, vol. 63, no. 1, pp. 1-38, 2010). For each iteration n > 1 with the left inverse

$$x^{n+1} = DA^T [ADA^T]^{-1} b \qquad (3)$$

where $D = \text{diag} (|x_1^n|, ..., |x_j^n|)$. Since the square matrix $[ADA^T]$ is not necessarily invertible, the inversion may actually be implemented with Moore-Penrose pseudo-inversion. While the above solution is based on minimum absolute norm regularization, a wide variety of solvers for such linear system exists and may be used to provide a suitable solution vector.

An example is now provided wherein the above described concepts are illustrated and explained more in detail.

An application is considered wherein an ultrasound pipeline with a transmitting and receiving transducer is used for a target (a so called 'phantom') containing a number of cysts and some high intensity structures.

In order to model the transmitting and receiving transducer, the device is assumed to comprise a linear array of piezoelectric crystals which respond to an electric input by expanding or contracting. Sound can be produced or recorded by exciting or recording the electric impulses from crystals. The resulting change in pressure then propagates through the tissue. This pressure wave does not follow a straight line, but instead radiates outwards away from the element illuminating all scatterers within the phantom, which is undesirable. Therefore multiple elements need to be activated in sequence so that the interference of their pressure waves results in an acoustic beam, which only illuminates a region close to a line of interest (image line). In order to increase the Signal to Noise Ratio (SNR) of the measured reflected acoustic waves multiple elements are preferably used when receiving and averaging out the data over all elements.

The transducer sampling frequency must be modelled, as well as the specific dimensions of the scattering elements (e.g. width, height, spacing between elements). Also the transmit transducer and receive transducer need to be characterised (e.g. the aperture). The impulse response of the aperture must be modelled both for the transmission and reception transducer.

There are two stages in the imaging process where focusing can be used. First, during emission of the excitation wave pulse, the emission of transducer crystals close to the central imaging line is usually delayed, such that the sound arrives at the same time is a chosen focus point. This focus is given by the specific protocol and is a free parameter for the proposed method. Given a specific sound transmission protocol, changing the frequency, changing the geometry of the probe or changing the focusing point of the excitation waves, will change the basis functions and require new basis functions. Therefore, the dictionary of a basis function is fitted and this allows reducing the amount of data to be collected for a reconstruction of the raw RF channel data.

The continuous target object is approximated to comprise a large collection of scatter points each linked to an acoustic impedance parameter indicative of how the scattering sites reflects incoming pressure waves. The physical dimensions of the phantom are modelled as well as the number of point scatterers. The potential point scatterers may be assumed to be uniformly distributed.

The model obviously also needs to indicate how a scatter element responds to the excitation of an instantaneous electric pulse. The response can be shown to be a short sinusoidal shaped acoustic pulse. Also an excitation similar to the elements own acoustic response can be modelled.

From the modelling the simulated echo response can be determined for each point scatterer. The echo responses constitute the basis functions to be used. Together they form the dictionary matrix of basis functions. After subsampling the RF channel data the reconstruction can start by inverting the regularized linear system. Finally a B-mode image can be created from the independently reconstructed RF lines. Since the method produces surrogate fully sampled raw RF channels, the steps of any conventional image formation pipeline can be used for computing the final B-mode image.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. Method for determining a representation of multichannel radio-frequency, RF, signals acquired from a physical environment comprising a transmitter comprising one or more transmitting elements for emitting ultrasound excitation pressure waves, a propagation medium containing non-uniformities reflecting said pressure waves and a receiver comprising one or more elements for recording said multichannel RF signals from said reflected pressure waves, the method comprising

   - determining a set of basis functions for representing said received reflected signals by deriving a model, whereby deriving said model comprises

     * modelling said transmitter as one or more transmitting elements and said receiver as one or more receiving elements,
     * modelling said propagation medium bounded by said transmitter and said receiver,
     * modelling individual responses of said non-uniformities to said excitation pressure waves,
     * deriving said set of basis functions from said individual responses by simulating response to excitation of said non-uniformities in said propagation medium,

   - determining a representation of said recorded multichannel RF signals using said set of basis functions obtained with said model.

2. Method as in claim 1 comprising a step wherein said recorded multichannel RF signals represented using said set of basis functions are combined to reconstruct an approximation of the complete raw data channel signal from which said multichannel RF signals are obtained.

3. Method as in claim 2, wherein said recorded multichannel RF signals are sampled with a non-uniform sampling pattern.

4. Method as in claim 2 or 3, wherein said reconstructing comprises applying an iterative reweighted least squares method.

5. Method as in any of claims 1 to 4, wherein said modelling of said transmitter and said receiver takes in to account the geometry.

6. Method as in any of the previous claims, comprising a step of making a brightness image using said representation of said recorded RF signals.

7. A program, executable on a programmable device containing instructions, which when executed, perform the method as in any of claims 1 to 6.

8. Ultrasound imaging system comprising

   - a transmitter for emitting excitation pressure waves over a propagation medium reflecting said pressure waves, said transmitter comprising one or more transmitting elements,
- a receiver comprising one or more elements for recording multichannel RF signals from said reflected pressure waves,
- processing means arranged for deriving a model of said transmitter and said receiver and of said propagation medium and the individual responses of non-uniformities of said propagation medium to said excitation pressure waves and for deriving a set of basis functions using said model, said processing means further arranged for determining a representation of said recorded multichannel RF signals using said set of basis functions.

9. Ultrasound imaging system as in claim 8, wherein said transmitter and said receiver are integrated.

10. Ultrasound imaging system as in claim 8 or 9, wherein said transmitter elements and/or said receiver elements are piezo-electric crystals or silicon membranes.

11. Ultrasound imaging system as in any of claims 8 to 10, comprising sampling means for sampling said recorded multichannel RF signals.

**Fig. 1**

A. Emission of excitation pulse

B. Reception of echo responses

C. Image reconstruction

Physical object      Under-sampled RF channels      Full RF channels CS recovery

B-mode image      Log-compression + downsampling      Beamforming + Envelope detection

**Fig. 2**

| Wide/Flat<br>M × L | × | Tall/Skinny<br>L × N | × | Square<br>N × N | = | Wide/Fat<br>M × N |
|---|---|---|---|---|---|---|
| Φ | | Ψ | | W | | A |

**Fig. 3**

| Apodization over time | → | **Emission impulse** | | Reception echo subsamples | | Physically-based PSFs dictionary |
|---|---|---|---|---|---|---|
| ↓ | | ↓ | | ↓ | | ↓ |
| Apodization over elements | → | Delay emission beamshaping | | Compressed sensing recovery | → | **Channel RF data** |

| Log-compression | ← | Envelope detection | ← | **RF line** | ← | Delay and sum beamforming |
|---|---|---|---|---|---|---|
| ↓ | | | | | | ↑ |
| **B-mode image** | → | Visualization on display | → | Image interpretation | | Apodization over elements |

**Fig. 4**

**Fig.5**

Random        Low-discrepancy        Rank 1 lattice        Channel sampling

**Fig.6**

Europäisches
Patentamt

European
Patent Office

Office européen
des brevets

## EUROPEAN SEARCH REPORT

Application Number

EP 15 16 6098

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | HERVÉ LIEBGOTT ET AL: "Pre-beamformed RF signal reconstruction in medical ultrasound using compressive sensing", ULTRASONICS, vol. 53, no. 2, February 2013 (2013-02), pages 525-533, XP028959364, ISSN: 0041-624X, DOI: 10.1016/J.ULTRAS.2012.09.008 * abstract; figure 1 * * chapter 3 * * chapter 4.4 * | 1-11 | INV. G01S7/52 G01S15/89 |
| A | HERVÉ LIEBGOTT ET AL: "Compressive sensing in medical ultrasound", 2012 IEEE INTERNATIONAL ULTRASONICS SYMPOSIUM, 7 October 2012 (2012-10-07), pages 1-6, XP032434325, ISSN: 1948-5719, DOI: 10.1109/ULTSYM.2012.0486 ISBN: 978-1-4673-4561-3 * the whole document * | 1-11 | |
| A | CELINE QUINSAC ET AL: "3D Compressed sensing ultrasound imaging", 2010 IEEE ULTRASONICS SYMPOSIUM, 11 October 2010 (2010-10-11), pages 363-366, XP031952617, DOI: 10.1109/ULTSYM.2010.5935479 ISBN: 978-1-4577-0382-9 * the whole document * | 1-11 | TECHNICAL FIELDS SEARCHED (IPC) G01S |

The present search report has been drawn up for all claims

| Place of search | Date of completion of the search | Examiner |
|---|---|---|
| Munich | 15 October 2015 | Knoll, Bernhard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N. WAGNER et al.** Compressed beamforming in ultrasound imaging. *IEEE Transactions on Signal Processing,* 2012, vol. 60 (9), 4643-4657
- **CANDES et al.** An introduction to compressive sampling. *IEEE Signal Processing Magazine,* 2008, vol. 25, 21-30
- **H.LIEBGOTT et al.** Pre-beamformed RF signal reconstruction in medical ultrasound using compressive sensing. *Ultrasonics,* 2013, vol. 53 (2), 525-533

- **A. COHEN et al.** Biorthogonal bases of compactly supported wavelets. *Communications on Pure and Applied Mathematics,* 1992, vol. 45 (5), 485-560
- **J. A. JENSEN.** Field: a program for simulating ultrasound systems. *Medical & Biological Engineering & Computing,* 1996, vol. 34, 351-353
- **I. DAUBECHIES et al.** Iteratively reweighted least squares minimization for sparse recovery. *Communications on Pure and Applied Mathematics,* 2010, vol. 63 (1), 1-38